# FASCICULE DE BREVET EUROPEEN

(11) **EP 1 964 121 B1**
(45) Date de publication et mention de la délivrance du brevet: **16.05.2018**
(21) Numéro de dépôt: 06830261.1
(22) Date de dépôt: 30.11.2006
(51) Int. Cl.: G11B 20/00

(54) **MOYENS DE PROTECTION CONTRE LES LECTURES NON AUTORISÉES D'UN SUPPORT D'ENREGISTREMENT**
SCHUTZMITTEL GEGEN DAS UNERLAUBTE LESEN EINES AUFZEICHNUNGSMEDIUMS
MEANS FOR PROTECTING AGAINST NON-AUTHORISED READINGS OF A RECORDING SUPPORT

(30) Priorité: 01.12.2005 FR 0512191
(43) Date de publication de la demande: 03.09.2008
(73) Titulaire: Bonnan, Cyril, 92300 Levellois-Perret (FR)
(72) Inventeur: BONNAN, Cyril, 92300 Levallois-Perret (FR); BONNAN, Robert, 92200 Neuilly sur Seine (FR)
(74) Mandataire: Regimbeau
(86) Numéro de dépôt international: PCT/EP2006/069170
(87) Numéro de publication internationale: WO 2007/063117

(56) Documents cités:
- WO-A-2004/109678
- SAMSUNG: "slim digital home cinema system - HT-P1200 instruction manual" PRODUCT.SAMSUNG.COM, [Online] 19 juillet 2005 (2005-07-19), pages 1-88, XP002428357 Extrait de l'Internet: URL:http://product.samsung.com/micro_manua ls/htp1200/um_ht_p1200_manual_eng_050719.p df> [extrait le 2007-04-05]
- KIESKEURIG.NL: "samsung HTP-1200 home cinema systeem - prijsvergelijk, producvergelijk en reviews" WWW.KIESKEURIG.NL, [Online] XP002428358 Extrait de l'Internet: URL:http://www.kieskeurig.nl/product/36F90 678316FB362C12570590038BDCD.htm> [extrait le 2007-04-05]
- "DVD PLAYER DVD-V7200 Operating Instructions (Basic Operations)" PIONEER DVD PLAYER OPERATING INSTRUCTIONS, PIONEER, US, no. DVD-V7200, 1998, pages 20-21, XP002328097

## Description

La présente invention concerne un dispositif pour limiter l'accès à une partie ou à la totalité des données enregistrée sur un support à lecture seule tel que DVD, CD ou tout autres supports audio, vidéo, multimédia, etc.

Pour prendre l'exemple des films sur support DVD, ceux-ci sont traditionnellement visionnables par l'ensemble des personnes disposant d'un lecteur DVD.

Un éditeur de DVD Vidéo ne peut placer sur un ensemble de DVD qu'un film (ou n'importe quel autres données) qui peuvent être vues que par l'ensemble de la clientèle détenant le dit DVD et un lecteur DVD, mais ne peut pas limiter l'accès à un film pour un public choisi.

On connaît déjà certains dispositifs pour conditionner l'accès à la lecture d'un film sur DVD à la connaissance d'un code secret. Ainsi, le document WO-2004/109678 A décrit un système dans lequel seule la connaissance d'un code secret permet d'accéder à la table de lecture qui permettra d'assurer une vision du film dans une version normale, non altérée. En l'absence de ce code, la lecture est autorisée avec une table de lecture provoquant une lecture dégradée de l'oeuvre.

Un premier inconvénient de cette technique connue réside en ce qu'il est nécessaire de prévoir des instructions, qui peuvent inclure des calculs mathématiques complexes, pour déterminer à partir d'un code introduit (nécessairement une information structurée et typiquement une valeur numérique) une destination sur le disque, qui est soit la table de lecture du programme lui-même lorsque le code est correct, soit une indication de code erroné ou une table de lecture d'un programme dégradé si le code est incorrect.

Il est donc nécessaire que le lecteur DVD dispose des ressources permettant d'effectuer ces traitements, ce qui peut ne pas être le cas avec des lecteurs d'entrée de gamme.

En outre, dans une version simple décrite dans ce document, où le code introduit est comparé à une valeur, cette valeur peut être lue directement sur le support par un fraudeur.

Un autre inconvénient de cette technique connue dans une de ses mises en oeuvre réside en ce qu'elle nécessite d'enregistrer sur le support des séquences dégradées pour composer le film dans sa version dégradée, ce qui limite ainsi la place disponible pour le film dans sa version « normale ». SAMSUNG: "slim digital home cinema system - HT-P1200 instruction manual", PRODUCT.SAMSUNG.COM, 19 juillet 2005, pages 1-88, Extrait de l'Internet: URL:http://product.samsung.com/ micro_manuals/htp1200/um_ht_p1200_manual_eng_050719.pdf [extrait le 2007-04-05] décrit un système de home cinéma pouvant lire un DVD et dans lequel un code de contrôle parental peut être configuré et doit alors être entré pour permettre la lecture du DVD.

La présente invention vise à pallier les inconvénients de l'état de la technique, tout en restant compatible avec des lecteurs DVD du commerce, sans qu'ils n'aient à être modifiés, et sans nécessiter sur le support de quelconques instructions à exécuter par le lecteur, ni nécessiter dans le lecteur des ressources permettant d'effectuer des calcules mathématiques complexes.

On propose ainsi selon l'invention un support d'informations accessible en lecture et sur lequel est stockée une oeuvre notamment multimédia destinée à être lue par un appareil comportant une unité de commande possédant des moyens de navigation en association avec une représentation, sur un écran de visualisation, des actions de navigation effectuées, le support mémorisant une composition (authoring) comprenant des pages à afficher sur l'écran et des liens entre ces pages en fonction d'actions de navigation effectuées au sein de celles-ci, caractérisé en ce que la composition contient un ensemble de pages de choix permettant chacune à un utilisateur d'effectuer à l'aide des moyens de navigation, l'un parmi une pluralité de choix pour former une combinaison de choix, les liens entre ces pages étant tels que la lecture de l'oeuvre est rendue possible seulement si les différents choix effectués correspondent à une combinaison prédéterminée.

Certains aspects préférés, mais non limitatifs, de ce support sont les suivants :
* la combinaison est ordonnée.
* la composition comprend un premier jeu de pages de choix liées entre elles selon un processus où tous les choix correspondant à une combinaison correcte est choisie, et un second jeu de pages de choix d'aspects identiques à au moins certaines des pages du premier jeu, liées entre elles indépendamment du choix effectué, et liées à des pages respectives du premier jeu pour tout choix erroné dans lesdites pages respectives.
* les éléments de choix contenus dans les pages sont affichés sous forme de caractères alphanumériques, de dessins ou de mots.
* l'oeuvre est inscrite sur le support selon un format multipiste possédant au moins pour la vidéo ou l'audio une piste lue par défaut lors d'un accès direct à un fichier du support via un ordinateur, tandis que ladite piste lue par défaut présente un contenu leurre, en ce qu'une autre piste contient une composante de l'oeuvre telle qu'elle doit être visionnée, et que ladite table de lecture comprend un pointeur vers ladite autre piste.

On propose selon un deuxième aspect de l'invention un procédé pour accéder en lecture à une oeuvre notamment multimédia stockée sur un support, ladite lecture étant effectuée à l'aide d'un appareil comportant une unité de commande possédant des moyens de navigation en association avec une représentation, sur un écran de visualisation, des actions de navigation effectuées, et le support mémorisant une composition comprenant des pages à afficher sur l'écran et des liens entre ces pages en fonction d'actions de navigation effectuées au sein de celles-ci, procédé caractérisé en ce qu'il comprend les étapes suivantes :
- affichage d'un ensemble de pages de choix permettant chacune à un utilisateur d'effectuer à l'aide des moyens de navigation, l'un parmi une pluralité de choix pour former une combinaison de choix,
- seulement si les différents choix effectués correspondent à une combinaison prédéterminée, autoriser la lecture de l'oeuvre sur le support.

Certains aspects préférés mais non limitatifs de ce procédé sont les suivants :
* la combinaison de choix est ordonnée.
* la composition comprend un premier jeu de pages de choix et un second jeu de pages de choix d'aspects identiques à au moins certaines des pages du premier jeu, tandis qu'un choix correct effectué sur une page du premier jeu constitue un lien vers une page suivante du premier jeu, qu'un choix quelconque effectué sur une page du second jeu constitue un lieu vers une pages suivante du second jeu, et qu'un choix incorrect effectué sur une page du premier jeu liées entre elles indépendamment du choix effectuée, et liées à des pages respectives du premier jeu pour tout choix erroné dans lesdites pages respectives.

* les éléments de choix contenus dans les pages sont affichés sous forme de caractères alphanumériques, de dessins ou de mots.
* la lecture de l'oeuvre s'effectue à partir d'une table de lecture pointant vers au moins une piste d'un fichier audiovisuel qui n'est pas une piste par défaut lue lors d'un accès direct par un ordinateur au fichier correspondant sur le support.

On comprend donc que grâce à la présente invention, c'est par navigation de page à page, à l'aide de la télécommande d'un lecteur DVD qui n'est modifié en aucune manière, et selon un trajet de navigation déterminé, que l'on peut aboutir à la lecture de l'oeuvre.

Avantageusement, et dans la mesure où de nombreux boîtiers de télécommande de lecteurs DVD ne possèdent pas de touches alphanumériques, les pages fixes possèdent un ensemble de symboles alphanumériques, ou simplement numériques, et la navigation entre ces pages s'effectue à l'aide des touches haut/bas/droite/gauche et de la touche « OK » ou « entrée » ou « validation » du boîtier de télécommande, touches qui elles sont toujours prévues sur un tel boîtier.

Il est ainsi possible à un utilisateur de sélectionner une suite imposée de caractères alphanumériques ou numériques, seule cette combinaison permettant de naviguer jusqu'à la lecture de l'oeuvre.

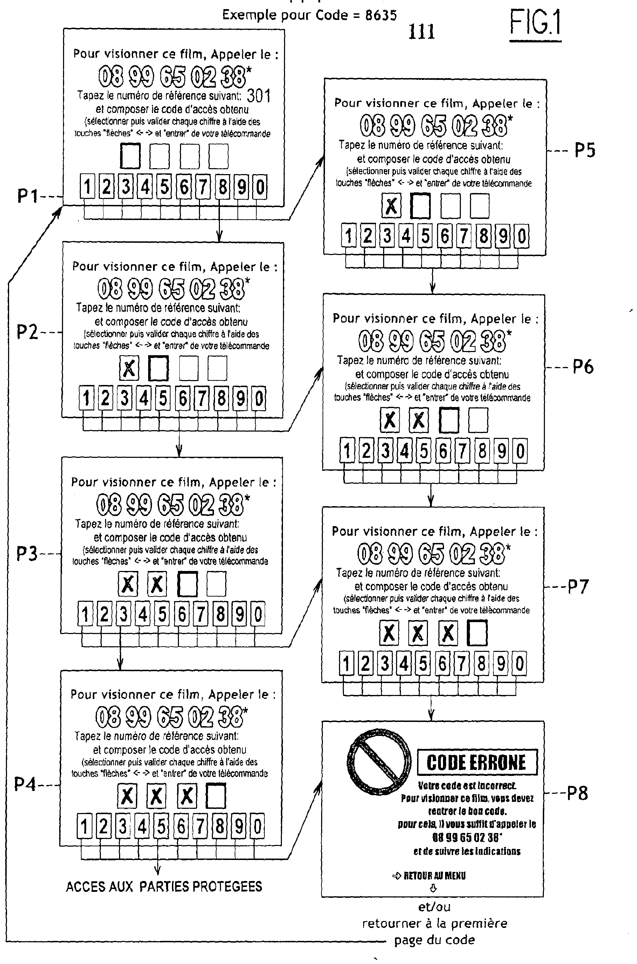

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels la figure unique illustre une composition de pages et de leurs liens, apte à mettre en oeuvre le procédé de la présente invention.

On rappellera en préambule que les équipements de lecture de supports DVD sont des dispositifs en grande majorité interactifs, où l'utilisateur déplace un curseur ou autre élément de signalisation (encadrement, surlignement, soulignement, etc.) à travers des pages de menus d'apparences pouvant être très variées, qui sont affichés sur l'écran du téléviseur connecté à l'équipement afin d'accéder à tel ou tel partie des données écrites sur le support DVD. Chaque élément de menu constitue ainsi un lien vers une autre page de menu possédant elle-même des liens vers d'autres pages, etc.

La structure et la forme de ces menus sont définis avant la fabrication du support DVD par ce que l'on appelle l'authoring, en terminologie anglo-saxonne (dont le « chapitrage » est l'un des aspects et qu'on appellera dans la suite « composition »), et sont mémorisés inscrits sur le support DVD dans un format standard reconnu par l'équipement lors de la lecture.

Selon la présente invention, l'authoring d'un support DVD est conçu, entre autres, pour autoriser la lecture du contenu seulement si l'utilisateur connaît un certain code, qui peut être par exemple une combinaison de N chiffres, mais qui peut également être une combinaison, ordonnée ou non, de tous chiffres, lettres, symboles, mots, dessins, etc.

On va donner dans la suite un exemple de mise en oeuvre de l'invention où le code nécessaire pour lire le contenu est un code numérique à quatre chiffres, ici « 8 6 3 5 ».

Lors de l'insertion du DVD dans le lecteur, une page d'accueil est affichée automatiquement ou par appui sur une touche « menu », et à partir d'elle, l'utilisateur peut se déplacer dans divers menus interactifs du DVD pour accéder à diverses parties, de façon classique en soi.

Maintenant en référence à la figure, si lors d'une telle navigation l'utilisateur souhaite accéder à une partie protégée ou sécurisée par code selon la présente invention, alors l'authoring inscrit sur le DVD est tel qu'il accède d'abord à une page P1 comportant une indication l'invitant à introduire le premier caractère du code.

A l'aide des touches Haut/Bas/Droite/Gauche du boîtier de télécommande, l'utilisateur amène alors le curseur affiché à l'écran sur le premier chiffre du code, puis valide en appuyant sur la touche de validation de choix (touche conventionnellement dénommée « Entrée », « OK », « Valid », etc. sur un appareil du commerce).

Dans l'hypothèse où l'utilisateur a sélectionné ci-dessus un chiffre différent du premier chiffre du code (ici 8), alors l'authoring est tel que ceci provoque l'accès à une autre page de choix P5 invitant à la sélection du deuxième chiffre. A ce stade, quel que soit le chiffre sélectionné et validé, ceci provoque l'accès à une autre page de choix P6 invitant à la sélection du troisième chiffre. A nouveau, quel que soit le caractère sélectionné puis validé, le processus amène à une autre page de choix P7 pour la sélection et la validation du quatrième chiffre. Ici encore, quel que soit le caractère sélectionné puis validé, l'authoring dirige l'utilisateur vers une page P8, qui informe celui-ci que le code saisi n'est pas valide.

Cette page peut comporter des liens de retour vers la page d'accueil du DVD, ou encore vers la première page P1 de saisie du code, ou vers d'autres pages, mais en tout cas ne comporte aucun lien vers une page susceptible d'autoriser la lecture du programme enregistré.

Si, lors de la sélection du premier chiffre du code, l'utilisateur sélectionne le code correct (à savoir 8), ceci constitue un lien vers une autre page P2 invitant l'utilisateur à sélectionner le deuxième caractère. Si un chiffre erroné (en l'occurrence autre que 6) est sélectionné à ce stade, alors c'est la page de choix P6 vers laquelle le processus se dirige. A partir, de là, quels que soient les autres chiffres saisis, le processus aboutit à la page P8, signalant une erreur de code.

Si en revanche à la page P2 l'utilisateur sélectionne le chiffre correct (6), alors cette sélection constitue un lien vers la page P3, où le troisième caractère du code doit être saisi.

Si un chiffre erroné est saisi à ce stade, alors l'authoring est tel que c'est vers la page P7 que le processus se dirige, à l'issue de quoi, quelque soit le quatrième chiffre sélectionné, on aboutit à une signalisation d'un code erroné en page P8.

Si en revanche c'est le chiffre correct (3) qui est sélectionné sur la page P3, alors le processus amène à une page de choix P4 d'aspect identique à celle de la figure P7, pour la sélection du quatrième chiffre du code. Si le chiffre sélectionné est incorrect, alors le processus se dirige vers la page d'erreur P8. Si en revanche le chiffre correct (5) est sélectionné, le processus aboutit soit directement à l'accès à la table de lecture du programme, pour démarrer directement la lecture de celui-ci, soit à une page intermédiaire, notamment dans le cas où le DVD contient plusieurs programmes protégés, ou différentes exécutions du programme par différentes tables de lecture, etc., afin de permettre à l'utilisateur de choisir ce qu'il souhaite visionner.

Un premier avantage du processus décrit ci-dessus est qu'il est mis en oeuvre avec un lecteur DVD du commerce, qui n'a pas à être modifié. Un autre avantage réside en ce que l'utilisateur est incapable de déduire du comportement de l'authoring quel(s) chiffre(s) du code étai(en)t erroné(s), puisque les pages P2 et P5, P3 et P6 et enfin P4 et P7 sont strictement identiques deux à deux. Ceci rend la tâche de violation de la combinaison aussi difficile que par exemple lorsqu'un code numérique est saisi en entier sur un clavier avant validation. En particulier, pour chaque élément choisi, qu'il corresponde à la combinaison correcte ou non, l'aspect de la page suivante est toujours le même.

On comprend que la description qui précède peut comporter des variantes nombreuses. En particulier, dans la mesure où la combinaison secrète est obtenue sans saisie d'information et vérifiée sans le moindre calcul, mais par navigation pure dans le cadre d'un authoring conçu à cet effet, on comprend que la combinaison peut indifféremment être composés de chiffres, de lettres, de dessins, de mots entiers, etc. chacun d'eux dans sa version correcte devant être sélectionné et validé à chaque étape. On comprend également que la protection de l'invention est opérationnelle sur n'importe quel lecteur du marché.

Par ailleurs, on sait qu'à partir d'un ordinateur du commerce, le contenu d'un support DVD peut être lu sans difficulté, en contournant l'authoring écrit sur le support. Il est ainsi possible de parcourir l'arborescence d'un support DVD et de double-cliquer sur les fichiers de type .vob pour en lancer la lecture sans passer par les menus de chapitrage.

Selon un perfectionnement de la présente invention, on rend l'accès à ces fichiers en vue d'une lecture normale du programme enregistré plus difficile.

On sait à cet égard qu'un fichier au format .vob peut contenir plusieurs pistes vidéo. Cette possibilité offerte par ce format a été prévue historiquement par exemple pour permettre à l'utilisateur de choisir parmi différents angles de vue d'une même scène.

On peut ainsi comparer un fichier .vob à une série de pistes vidéo V1 à Vn auxquelles est associée une piste son stéréo unique, ou une série de pistes son stéréo dans le cas de versions multilingues.

Par défaut, lorsqu'un double clic est effectué sur un fichier .vob sur un ordinateur personnel, c'est la première piste vidéo V1 qui est lue.

Le perfectionnement selon l'invention consiste à prévoir la partie vidéo du véritable programme par exemple sur la piste V2, tandis que la piste V1 possède un contenu vidéo leurre ne correspondant pas au programme. Typiquement, il peut s'agir soit d'une piste entièrement noire, soit d'une piste contenant une image fixe indiquant qu'un code est nécessaire pour visionner le contenu, soit tout autre contenu qui ne répond pas aux attentes de l'utilisateur.

Parallèlement, le système d'authoring décrit plus haut est tel que la ou les tables de lectures accessibles par combinaison secrète se réfèrent aux pistes vidéo qui conviennent.

Dans le même temps, la fonction de changement d'angle de vue doit être désactivée dans le support DVD, de manière à interdire à l'utilisateur de lire autre chose que les pistes vidéo leurres lorsqu'il n'a pas réussi à accéder à la table de lecture correspondant au véritable programme.

En variante, il est possible d'utiliser une piste audio leurre en lieu et place de la piste audio normale, selon le même principe.

Bien entendu, la présente invention n'est nullement limitée aux formes de réalisation décrites ci-dessus et représentées sur les dessins, mais l'homme du métier saura y apporter de nombreuses variantes ou modifications.

En particulier, elle s'applique à tout environnement interactif par navigation conduisant à l'accès à des données telles que vidéo, audio, images fixes, textes, etc.), et à tout type de support de ces données tel que DVD, CD-Vidéo, mini-disque vidéo.

En outre, l'authoring permettant de protéger l'accès à un contenu peut être mis en place autant de fois que nécessaire sur un même support, avec des combinaisons différentes, pour protéger différents contenus respectifs.

## Revendications

1. Support d'informations accessible en lecture et sur lequel est stockée une oeuvre notamment multimédia destinée à être lue par un appareil comportant une unité de commande possédant des moyens de navigation en association avec une représentation, sur un écran de visualisation, des actions de navigation effectuées, le support mémorisant une composition (authoring) comprenant des pages à afficher sur l'écran et des liens entre ces pages en fonction d'actions de navigation effectuées au sein de celles-ci, **caractérisé en ce que** lesdites pages comprenant des pages de choix permettant chacune à un utilisateur d'effectuer à l'aide des moyens de navigation, l'un parmi une pluralité de choix d'actions de navigation pour former une combinaison de choix d'actions de navigation, les liens entre ces pages de choix étant tels que l'accès à une table de lecture de l'oeuvre est rendue possible seulement si les différents choix d'actions de navigation effectués correspondent à une combinaison prédéterminée.

2. Support selon la revendication 1, **caractérisé en ce que** la combinaison est ordonnée.

3. Support selon la revendication 1 ou 2, **caractérisé en ce que** la composition comprend un premier jeu de pages de choix liées entre elles selon un processus où tous les choix correspondant à une combinaison correcte est choisie, et un second jeu de pages de choix d'aspects identiques à au moins certaines des pages du premier jeu, liées entre elles indépendamment du choix effectué, et liées à des pages respectives du premier jeu pour tout choix erroné dans lesdites pages respectives.

4. Support selon la revendication 3, **caractérisé en ce que** les éléments de choix contenus dans les pages sont affichés sous forme de caractères alphanumériques, de dessins ou de mots.

5. Support selon l'une des revendications 1 à 4, **caractérisé en ce que** l'oeuvre est inscrite sur le support selon un format multipiste possédant au moins pour la vidéo ou l'audio une piste lue par défaut lors d'un accès direct à un fichier du support via un ordinateur, tandis que ladite piste lue par défaut présente un contenu leurre, **en ce qu'**une autre piste contient une composante de l'oeuvre telle qu'elle doit être visionnée, et **en ce que** ladite table de lecture comprend un pointeur vers ladite autre piste.

6. Procédé pour accéder en lecture à une oeuvre notamment multimédia stockée sur un support, ladite lecture étant effectuée à l'aide d'un appareil comportant une unité de commande possédant des moyens de navigation en association avec une représentation, sur un écran de visualisation, des actions de navigation effectuées, et le support mémorisant une composition comprenant des pages à afficher sur l'écran et des liens entre ces pages en fonction d'actions de navigation effectuées au sein de celles-ci, procédé **caractérisé en ce qu'**il comprend les étapes suivantes :
- affichage d'un ensemble de pages de choix comprises dans lesdites pages, les pages de choix permettant chacune à un utilisateur d'effectuer à l'aide des moyens de navigation, l'un parmi une pluralité de choix d'actions de navigation pour former une combinaison de choix d'actions de navigation,
- seulement si les différents choix d'actions de navigation effectués correspondent à une combinaison prédéterminée définie par les liens entre les pages de choix, autoriser la lecture de l'oeuvre sur le support.

7. Procédé selon la revendication 6, **caractérisé en ce que** la combinaison de choix est ordonnée.

8. Procédé selon la revendication 7, **caractérisé en ce que** la composition comprend un premier jeu de pages de choix et un second jeu de pages de choix d'aspects identiques à au moins certaines des pages du premier jeu, **en ce qu'**un choix correct effectué sur une page du premier jeu constitue un lien vers une page suivante du premier jeu, **en ce qu'**un choix quelconque effectué sur une page du second jeu constitue un lieu vers une pages suivante du second jeu, et **en ce qu'**un choix incorrect effectué sur une page du premier jeu constitue un lien vers une page du second jeu.

9. Procédé selon la revendication 8, **caractérisé en ce que** les éléments de choix contenus dans les pages sont affichés sous forme de caractères alphanumériques, de dessins ou de mots.

10. Procédé selon l'une des revendications 6 à 9, **caractérisé en ce que** la lecture de l'oeuvre s'effectue à partir d'une table de lecture pointant vers au moins une piste d'un fichier audiovisuel qui n'est pas une piste par défaut lue lors d'un accès direct par un ordinateur au fichier correspondant sur le support.

## Patentansprüche

1. Datenträger, der im Lesezugriff zugänglich ist und auf dem ein, insbesondere Multimedia-, Werk gespeichert ist, das dazu vorgesehen ist, über ein Gerät gelesen zu werden, welches eine Steuereinheit umfasst, die Navigationsmittel in Verbindung mit einer Wiedergabe der ausgeführten Navigationsaktionen auf einem Visualisierungsbildschirm besitzt, wobei der Träger eine Zusammenstellung (Authoring) speichert, die auf dem Bildschirm anzuzeigende Seiten und Verknüpfungen zwischen diesen Seiten umfasst, die von innerhalb derselben ausgeführten Navigationsaktionen abhängen, **dadurch gekennzeichnet, dass** die Seiten Auswahlseiten umfassen, welche jede einem Benutzer ermöglichen, mithilfe der Navigationsmittel eine aus einer Vielzahl von Navigationsaktionsauswahlen auszuführen, um eine Kombination von Navigationsaktionsauswahlen zu bilden, wobei die Verknüpfungen zwischen diesen Auswahlseiten so sind, dass der Zugriff auf eine Lesetabelle des Werkes nur möglich gemacht wird, wenn die verschiedenen ausgeführten Navigationsaktionsauswahlen einer vorbestimmten Kombination entsprechen.

2. Träger nach Anspruch 1, **dadurch gekennzeichnet, dass** die Kombination geordnet ist.

3. Träger nach Anspruch 1 oder 2, **dadurch gekennzeichnet, dass** die Zusammenstellung einen ersten Satz an Auswahlseiten umfasst, die untereinander nach einem Prozess verknüpft sind, in dem alle Auswahlen einer richtigen Kombination entsprechen, welche gewählt wird, und einen zweiten Satz an Auswahlseiten, die mit mindestens gewissen der Seiten des ersten Satzes von identischem Aussehen sind, welche unabhängig von der ausgeführten Auswahl untereinander verknüpft sind und für jede fehlerhafte Auswahl in den jeweiligen Seiten mit jeweiligen Seiten des ersten Satzes verknüpft sind.

4. Träger nach Anspruch 3, **dadurch gekennzeichnet, dass** die in den Seiten enthaltenen Auswahlelemente in Form von alphanumerischen Zeichen, von Zeichnungen oder von Wörtern angezeigt werden.

5. Träger nach einem der Ansprüche 1 bis 4, **dadurch gekennzeichnet, dass** das Werk nach einem Mehrspurformat auf den Träger geschrieben ist, das mindestens für das Video oder den Ton eine Spur besitzt, die bei einem Direktzugriff über einen Computer auf eine Datei des Trägers standardmäßig gelesen wird, obwohl die standardmäßig gelesene Spur einen irreführenden Inhalt aufweist, dadurch, dass eine andere Spur einen Bestandteil des Werkes so, wie er dargestellt werden soll, umfasst, und dadurch, dass die Lesetabelle einen Zeiger zu der anderen Spur umfasst.

6. Verfahren, um im Lesezugriff auf ein, insbesondere Multimedia-, Werk zuzugreifen, das auf einem Träger gespeichert ist, wobei das Lesen mithilfe eines Gerätes ausgeführt wird, das eine Steuereinheit umfasst, welche Navigationsmittel in Verbindung mit einer Darstellung der ausgeführten Navigationsaktionen auf einem Visualisierungsbildschirm besitzt, und wobei der Träger eine Zusammenstellung speichert, die auf dem Bildschirm anzuzeigende Seiten und Verknüpfungen zwischen diesen Seiten umfasst, die von innerhalb derselben ausgeführten Navigationsaktionen abhängen, wobei das Verfahren **dadurch gekennzeichnet ist, dass** es die folgenden Schritte umfasst:
- Anzeigen einer Gesamtheit von Auswahlseiten, die in den Seiten umfasst sind, wobei die Auswahlseiten jede einem Benutzer ermöglichen, mithilfe der Navigationsmittel eine aus einer Vielzahl von Navigationsaktionsauswahlen auszuführen, um eine Kombination von Navigationsaktionsauswahlen zu bilden,
- Gestatten des Lesens des Werkes auf dem Träger nur, wenn die verschiedenen ausgeführten Navigationsaktionsauswahlen einer vorbestimmten Kombination entsprechen, die durch die Verknüpfungen zwischen den Auswahlseiten definiert ist.

7. Verfahren nach Anspruch 6, **dadurch gekennzeichnet, dass** die Auswahlkombination geordnet ist.

8. Verfahren nach Anspruch 7, **dadurch gekennzeichnet, dass** die Zusammenstellung einen ersten Satz an Auswahlseiten und einen zweiten Satz an Auswahlseiten umfasst, die mit mindestens gewissen der Seiten des ersten Satzes von identischem Aussehen sind, dadurch, dass eine richtige Auswahl, die auf einer Seite des ersten Satzes ausgeführt wird, eine Verknüpfung zu einer folgenden Seite des ersten Satzes ausmacht, dadurch, dass eine beliebige Auswahl, die auf einer Seite des zweiten Satzes ausgeführt wird, eine Verknüpfung zu einer folgenden Seiten des zweiten Satzes ausmacht, und dadurch, dass eine falsche Auswahl, die auf einer Seite des ersten Satzes ausgeführt wird, eine Verknüpfung zu einer Seite des zweiten Satzes ausmacht.

9. Verfahren nach Anspruch 8, **dadurch gekennzeichnet, dass** die in den Seiten enthaltenen Auswahlelemente in Form von alphanumerischen Zeichen, von Zeichnungen oder von Wörtern angezeigt werden.

10. Verfahren nach einem der Ansprüche 6 bis 9, **dadurch gekennzeichnet, dass** das Lesen des Werkes anhand einer Lesetabelle erfolgt, die zu mindestens einer Spur einer audiovisuellen Datei zeigt, welche keine Spur ist, die bei einem Direktzugriff durch einen Computer auf die entsprechende Datei auf dem Träger standardmäßig gelesen wird.

## Claims

1. A medium for information that can be accessed for playing, and on which is stored a work, in particular a multimedia work which is intended to be played by an apparatus that includes a control unit that includes navigation means, in association with a representation, on a display screen, of the navigation operations effected, where the medium storing an authoring composition includes pages to be displayed on the screen, and links between these pages as a function of the navigation operations effected within these pages, **characterised in that** said pages comprise selection pages, each allowing a user, using the navigation means, to make one of a plurality of navigation operation choices in order to form a combination of navigation operation choices, with the links between these selection pages being such that the playing of the work is rendered possible only if the various navigation operation choices effected correspond to a predetermined combination.

2. The medium according to claim 1, **characterised in that** the combination is in a sequence.

3. The medium according to claim 1 or 2, **characterised in that** the composition includes a first set of selection pages which are linked together according to a process in which all of the choices corresponding to a correct combination are chosen, and a second set of selection pages of identical appearance to at least some of the pages of the first set, which are linked together independently of the choice effected, and linked to the respective pages of the first set for any erroneous choice in the said respective pages.

4. The medium according to claim 3, **characterised in that** the elements of choice contained in the pages are displayed in the form of alphanumerical characters, drawings or words.

5. The medium according to one of claims 1 to 4, **characterised in that** the work is recorded on the medium in a multitrack format that has, at least for the video or the audio, one track that is played by default as a result of direct access to a file on the medium via a computer, whereas the said track that is played by default has a decoy content, wherein another track contains a component of the work as it is to be viewed, and wherein the said player comprises a pointer to the said other track.

6. A method to gain read access to a work, in particular a multimedia work, stored on a medium, with the said playing process being effected using an apparatus that includes a control unit that has navigation means in association with a representation, on a display screen, of the navigation operations effected, and the medium storing a composition that includes pages to be displayed on the screen, and links between these pages as a function of the navigation operations effected within these pages, this method being wherein it includes the following steps:
- display of a collection of selection pages included in the said pages, the selection pages each allowing a user, using navigation means, to make one of a plurality of navigation operation choices in order to form a combination of navigation operation choices,
- authorisation of the playing of the work on the medium, only if the various navigation operation choices effected correspond to a predetermined combination.

7. The method according to claim 6, **characterised in that** the combination of choices is in a sequence.

8. The method according to claim 7, **characterised in that** the composition includes a first set of selection pages and a second set of selection pages of identical appearance to at least some of the pages of the first set, wherein a correct choice effected on a page of the first set constitutes a link to a following page of the first set, wherein any choice effected on a page of the second set constitutes a link to a following page of the second set, and wherein an incorrect choice effected on a page of the first set constitutes a link to a page of the second set.

9. The method according to claim 8, **characterised in that** the elements of choice contained in the pages are displayed in the form of alphanumerical characters, drawings or words.

10. The method according to any of claims 6 to 9, **characterised in that** the playing of the work is effected on a player pointing to at least one track of an audiovisual file that is not a default track read as a result of direct access by a computer to the corresponding file on the medium.
